# EUROPÄISCHE PATENTSCHRIFT

(11) **EP 3 053 464 B1**
(45) Veröffentlichungstag und Bekanntmachung des Hinweises auf die Patenterteilung: **19.07.2017**
(21) Anmeldenummer: 16151022.7
(22) Anmeldetag: 13.01.2016
(51) Int. Cl.: A42B 3/06, G01J 1/50, G09F 3/02, G01J 1/42

(54) **UV-ALTERUNGSANZEIGE FÜR KUNSTSTOFFERZEUGNISSE, INSBESONDERE FÜR SCHUTZHELME**
UV AGING DISPLAY FOR PLASTIC PRODUCTS, IN PARTICULAR FOR SAFETY HELMETS
AFFICHAGE DU VIEILLISSEMENT UV POUR PRODUITS EN MATIERE SYNTHETIQUE, EN PARTICULIER CASQUES DE PROTECTION

(30) Priorität: 03.02.2015 DE 202015100497 U
(43) Veröffentlichungstag der Anmeldung: 10.08.2016
(73) Patentinhaber: VOSS-HELME GmbH & Co. KG, 30938 Burgwedel (DE)
(72) Erfinder: BRODTE, Gordon, 30938 Burgwedel (DE)
(74) Vertreter: Bremer, Ulrich

(56) Entgegenhaltungen:
- US-A- 4 705 046
- US-A- 5 117 116
- US-A1- 2005 145 525
- US-A1- 2011 133 103

## Beschreibung

Die vorliegende Erfindung betrifft eine UV-Alterungsanzeige für Kunststofferzeugnisse, insbesondere für Schutzhelme, gemäß dem Oberbegriff des Schutzanspruchs 1.

Eine derartige Alterungsanzeige ist in der EP 1 653 819 B1 beschrieben. Diese Anzeige ist auf dem zu überwachenden Kunststofferzeugnis fest angebracht bzw. in dieses integriert. Sie weist Pigmente auf, die bei UV-Strahlung degradieren, wobei deren Degradierung der durch UV-Strahlung verursachten Degradierung des Kunststoffmaterials des zu überwachenden Erzeugnisses entspricht. In einer Ausführungsform weist die Anzeige mehrere Felder auf, deren Schichtstärke sich von Feld zu Feld ändert. Bei Einwirkung von UV-Strahlung degradieren die Pigmente in der dünnsten Schicht zuerst und in der stärksten Schicht zuletzt. Die einzelnen Felder der Anzeige nehmen dadurch unterschiedliche Farben an, die ein Maß für die Alterung des Kunststofferzeugnisses sind.

Die DE 43 22 200 A1 offenbart ein Wischblatt eines Scheibenwischers für Kraftfahrzeuge. Es ist bekannt, dass Wischblätter insbesondere durch Einwirkung von UV-Strahlen altern, worunter ihre Reinigungswirkung leidet. Um einen Fahrer über die Alterung des Wischblattes zu informieren, ist auf dem Träger des Wischblattes ein Kunststoffteil aufgebracht, dessen Farbe sich unter dem Einfluss von UV-Strahlen über die Zeit ändert. Die Farbänderung ist dabei so stark, dass sie dem Fahrer ins Auge fällt und diesen zum Wischblattwechsel anregt. Das Kunststoffteil ist als Folie ausgebildet und auf den Träger des Wischblattes aufgeklebt. Damit die Alterung des Kunststoffteils nicht schon beim Nichtgebrauch des Wischblattes erfolgt, ist es mit einer entfernbaren Abdeckung versehen, z. B. auch einer Folie, welche gegen UV-Strahlung resistent ist.

In der DE 20 2013 101 212 U1 wird ein Fliegenfänger beschrieben, der eine alterungsverfärbende Beschichtung aufweist. Diese Beschichtung weist Farbpigmente und Farbmischungen auf, die durch das Einwirken von UV-Strahlung über einen längeren Zeitraum ihre Farbe wechseln. Damit wird der Ablauf einer empfohlenen Einsatzdauer des Fliegenfängers angezeigt.

Aufgabe der vorliegenden Erfindung ist es, eine UV-Alterungsanzeige für Kunststofferzeugnisse der eingangs genannten Art zur Verfügung zu stellen, an der ein Nutzer zuverlässig den Anfang und das Ende einer tolerierbaren Alterung des Kunststofferzeugnisses erkennen kann.

Diese Aufgabe wird erfindungsgemäß mit einer UV-Alterungsanzeige gelöst, die die Merkmale des Schutzanspruchs 1 aufweist.

Diese Alterungsanzeige weist also nicht nur ein Anzeigefeld auf, dessen Farbe sich unter Einfluss von UV-Strahlung über die Zeit von einer Ausgangsfarbe in eine Endfarbe ändert, sondern auch mindestens zwei Referenzfelder, die dem Anzeigefeld zugeordnet sind, wobei das eine Referenzfeld die Ausgangsfarbe des Anzeigefeldes und das andere Referenzfeld die Endfarbe des Anzeigefeldes hat. Aufgrund der Zuordnung der Referenzfelder zum Anzeigefeld kann ein Nutzer durch Vergleich der Farben zuverlässig feststellen, ob die Alterung des Kunststofferzeugnisses schon begonnen hat bzw. schon soweit fortgeschritten ist, dass das Kunststofferzeugnis ausgetauscht werden muss.

In vorteilhafter Ausgestaltung der Erfindung ist die Zuordnung der Referenzfelder zum Anzeigefeld so, dass die Referenzfelder an das Anzeigefeld angrenzen. So ist ein einfacher Farbvergleich möglich.

In einer weiteren Ausführungsform der vorliegenden Erfindung sind dem Anzeigefeld weitere Referenzfelder zugeordnet, deren Farbe einen Zwischenzustand zwischen der Ausgangsfarbe und der Endfarbe des Anzeigefeldes dokumentiert. Auf diese Weise erhält der Nutzer eine Aussage über den Fortschritt des Alterungsprozesses.

Weitere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt:
- Fig. 1: eine schematische Draufsicht auf eine UV-Alterungsanzeige gemäß einer ersten Ausführungsform der Erfindung im vergrößerten Maßstab,
- Fig. 2: eine schematische Draufsicht auf eine zweite Ausführungsform einer UV-Alterungsanzeige,
- Fig. 3: einen Schnitt durch ein Anzeigefeld der UV-Alterungsanzeigen gemäß den Fig. 1 und 2 in schematischer Weise, und
- Fig. 4: einen Arbeitsschutzhelm mit einer aufgeklebten UV-Alterungsanzeige gemäß Fig. 1.

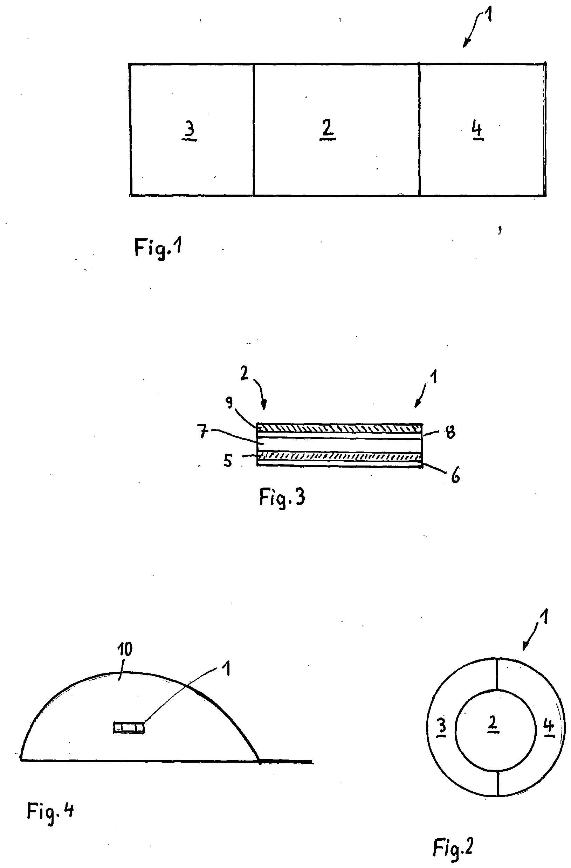

Fig. 1 zeigt eine streifenförmige UV-Alterungsanzeige 1. Diese besteht aus drei Feldern, einem Anzeigefeld 2 und zwei Referenzfeldern 3 und 4. Diese Referenzfelder 3 und 4 grenzen jeweils auf einer Seite an das Anzeigefeld 2 an. Das Anzeigefeld 2 ist mit einer Farbe versehen, welche Farbpigmente enthält, die unter dem Einfluss von UV-Strahlen ihre Farbe ändern, so z. B. von einer Ausgangsfarbe Rot in eine Endfarbe Weiß. Das Referenzfeld 3 ist in diesem Falle mit einer roten Farbe versehen, die im Farbton identisch ist mit der Ausgangsfarbe des Anzeigefeldes 2 ist, während das Referenzfeld 4 mit einer weißen Farbe versehen ist, deren Farbton identisch ist mit der Endfarbe des Referenzfeldes 2. Die Farben der Referenzfelder 3 und 4 sind im Gegensatz zu der Farbe des Referenzfeldes 2 lichtbeständig.

In Fig. 2 ist eine weitere Ausführungsform einer UV-Alterungsanzeige 1 dargestellt. Diese UV-Alterungsanzeige 1 besitzt ebenfalls wieder ein Anzeigefeld 2 und zwei Referenzfelder 3 und 4. Das Ausführungsbeispiel gemäß Fig. 2 unterscheidet sich von dem Ausführungsbeispiel gemäß Fig. 1 lediglich durch die geometrische Anordnung der Felder 2, 3 und 4. Das Anzeigefeld 2 ist hier kreisrund gestaltet, während die Referenzfelder 3 und 4 ringförmig jeweils am halben Umfang des Anzeigefeldes 2 an dieses angrenzen.

Der Schichtaufbau des Anzeigefeldes 2 geht aus der Schnittdarstellung gemäß Fig. 3 hervor. Fig. 3 zeigt lediglich in schematischer Weise den Schichtaufbau, nicht jedoch die tatsächlichen Schichtstärken. Wie aus Fig. 3 hervorgeht, besitzt das Anzeigefeld 2 eine Trägerfolie 5 aus Kunststoff, z. B. aus Polyester oder Polypropylen, auf deren Außenseite eine Haftkleberschicht 6 angebracht ist. Die Trägerfolie 5 und die Haftkleberschicht 6 erstrecken sich auch auf die Referenzfelder 3 und 4. Im Bereich des Anzeigefeldes 2 ist auf die Trägerfolie 5 eine Druckfarbenschicht 7, z. B. mittels Siebdruck, aufgetragen, die lichtempfindliche Farbpigmente enthält. Um eine Verfärbung des Anzeigefeldes 2 schon während des Nichtgebrauchs des Kunststofferzeugnisses zu verhindern, ist auf die Druckfarbenschicht 7 mittels einer halbporösen Klebstoffschicht 8 eine lichtresistente Abdeckfolie 9 aufgetragen. Diese kann sich auch über die Referenzfelder 3 und 4 erstrecken.

Die Befestigung der oben beschriebenen UV-Alterungsanzeigen 1 auf einem zu überwachenden Kunststofferzeugnis erfolgt dadurch, dass die UV-Alterungsanzeigen mit der Haftkleberschicht 6 auf die Oberfläche des Erzeugnisses aufgedrückt werden. Das ist in Fig. 4 anhand eines Arbeitsschutzhelmes 10 dargestellt. Wenn der Arbeitsschutzhelm 10 in Gebrauch genommen wird, wird die Abdeckfolie 9 von der UV-Alterungsanzeige 1 abgezogen, so dass die Druckfarbenschicht 7 der UV-Strahlung ausgesetzt ist und damit der Alterungsprozess der Farbpigmente beginnt.

## Patentansprüche

1. UV-Alterungsanzeige für Kunststofferzeugnisse, insbesondere für Schutzhelme, mit einem Anzeigefeld, dessen Farbe sich unter Einfluss von UV-Strahlung über die Zeit von einer Ausgangsfarbe in eine Endfarbe ändert, **dadurch gekennzeichnet, dass** dem Anzeigefeld (2) mindestens zwei Referenzfelder (3, 4) zugeordnet sind, von denen das eine die Ausgangsfarbe des Anzeigefeldes (2) und das andere die Endfarbe des Anzeigefeldes (2) hat.

2. UV-Alterungsanzeige gemäß Anspruch 1, **dadurch gekennzeichnet, dass** die Referenzfelder (3, 4) direkt an das Anzeigefeld (2) angrenzen.

3. UV-Alterungsanzeige nach Anspruch 1 oder 2, **dadurch gekennzeichnet, dass** dem Anzeigefeld (2) weitere Referenzfelder zugeordnet sind, deren Farben Zwischenzustände zwischen der Ausgangsfarbe und der Endfarbe des Anzeigefeldes (2) darstellen.

4. UV-Alterungsanzeige nach einem der vorstehenden Ansprüche, **dadurch gekennzeichnet, dass** das Anzeigefeld (2) und die Referenzfelder (3, 4) auf einer Trägerfolie (5) aufgebracht sind.

5. UV-Alterungsanzeige nach Anspruch 4, **dadurch gekennzeichnet, dass** die Trägerfolie (7) auf das Kunststofferzeugnis (10) aufklebbar ist.

6. UV-Alterungsanzeige nach einem der vorstehenden Ansprüche, **dadurch gekennzeichnet, dass** das Anzeigefeld (2) vor Nutzung des Kunststofferzeugnisses (10) mit einer UV-resistenten Abdeckfolie (9) abgedeckt ist.

## Claims

1. UV ageing display for plastic products, in particular for safety helmets having a display field whose colour changes from a starting colour to an end colour under the influence of UV radiation over time, **characterised in that** at least two reference fields (3, 4) are assigned to the display field (2) of which one has the starting colour of the display field (2) and the other has the end colour of the display field (2).

2. UV ageing display according to Claim 1, **characterised in that** the reference fields (3, 4) directly border the display field (2).

3. UV ageing display according to Claim 1 or 2, **characterised in that** additional reference fields are assigned to the display field (2), the colours of said reference fields constitute intermediate states between the starting colour and the end colour of the display field (2).

4. UV ageing display according to any one of the preceding claims, **characterised in that** the display field (2) and the reference fields (3, 4) are applied on a carrier film (5).

5. UV ageing display according to Claim 4, **characterised in that** the carrier film (7) can be adhered onto the plastic product (10).

6. UV ageing display according to any one of the preceding claims, **characterised in that** the display field (2) is covered with a UV resistant cover film (9) before the plastic product (10) is used.

## Revendications

1. Affichage de vieillissement dû aux UV pour des produits en matière artificielle, notamment pour des casques de protection, avec une zone d'affichage, dont la couleur varie avec le temps sous l'influence du rayonnement UV d'une couleur initiale vers une couleur finale, **caractérisé en ce qu'**à la zone d'affichage (2) sont associées au moins deux zones de référence (3, 4), dont l'une est dans la couleur initiale de la zone d'affichage (2) et l'autre dans la couleur finale de la zone d'affichage (2).

2. Affichage de vieillissement dû aux UV suivant la revendication 1, **caractérisé en ce que** les zones de références (3, 4) sont directement adjacentes à la zone d'affichage (2).

3. Affichage de vieillissement dû aux UV suivant la revendication 1 ou 2, **caractérisé en ce qu'**à la zone d'affichage (2) sont associées d'autres zones de référence, dont les couleurs représentent des états intermédiaires entre la couleur initiale et la couleur finale de la zone d'affichage (2).

4. Affichage de vieillissement dû aux UV suivant une des revendications précédentes, **caractérisé en ce que** la zone d'affichage (2) et les zones de référence (3,4) sont déposées sur un film de support (5).

5. Affichage de vieillissement dû aux UV suivant la revendication 4, **caractérisé en ce que** le film de support (7) peut être collé sur le produit en matière artificielle (10).

6. Affichage de vieillissement dû aux UV suivant une des revendications précédentes, **caractérisé en ce que** la zone d'affichage (2) est recouverte d'une feuille de protection résistante aux UV (9) préalablement à l'utilisation du produit en matière artificielle (10).
